# EUROPEAN PATENT APPLICATION

(11) **EP 1 443 754 A2**
(43) Date of publication of application: **04.08.2004**
(21) Application number: 04001675.0
(22) Date of filing: 27.01.2004
(51) Int. Cl.: H04N 5/225

(54) **Camera module and manufacturing method thereof**

(30) Priority: 27.01.2003 JP 2003017012
(71) Applicant: Sanyo Electric Co., Ltd., Moriguchi-shi, Osaka 570-8677 (JP)
(72) Inventor: Ikeda, Osamu, Ora-gun, Gunma (JP)
(74) Representative: Glawe, Delfs, Moll & Partner

(57) **Abstract**

A camera module for a mobile device is reduced in size and manufacturing cost. A first lens (10) is bonded to a surface of an image sensor chip (20) through an IR filter. A second lens (30) is bonded onto the first lens (10) forming a compound lens. In addition, an iris material (40) is bonded onto the second lens (30). Bump electrodes (25A, B), which are external connection terminals, are formed on a back surface of the image sensor chip (20) and connected to a printed circuit board.

## Description

### BACKGROUND OF THE INVENTION

### Field of the Invention

This invention relates to a camera module and its manufacturing method, specifically to a small size camera module suitable to be incorporated into a portable device such as a mobile phone and a manufacturing method of it.

### Description of the Related Art

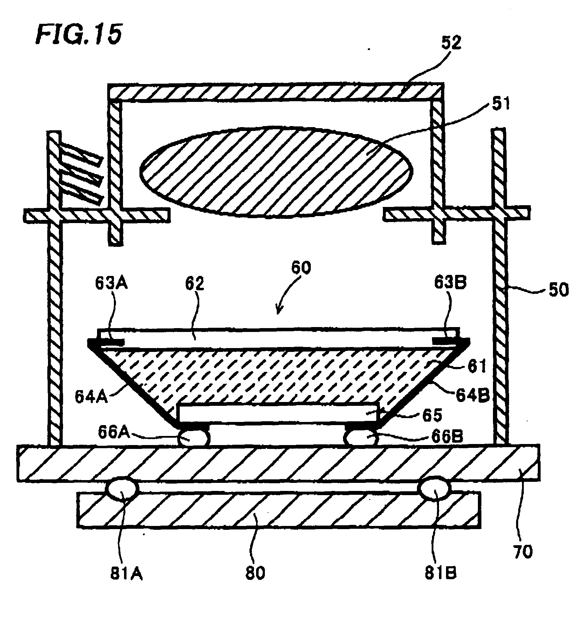

A mobile phone with camera function has come into widespread use in recent years. This type of mobile phone incorporates a small size camera module. Fig. 15 is a cross-sectional view showing a structure of such a camera module.

Fig. 15 shows a lens-barrel 50, a lens 51 mounted inside the lens-barrel 50 and an IR filter 52 to block infrared radiation attached to a mouth of the lens-barrel 50. It also shows an image sensor chip 60 housed in a space within the lens-barrel 50 and electrically connected with a printed circuit board 70.

The image sensor chip 60 converts light incident on it from a photogenic subject through the IR filter 52 and the lens 51 into electric signals. In the image sensor chip 60, CCDs (Charge Coupled Devices) are formed in a surface of a silicon chip 61 and a supporting glass substrate 62 is bonded to the silicon chip 61 to bolster it.

Each of redistribution wirings 64A and 64B is formed extending from each of electrode pads 63A and 63B, which are formed on a peripheral surface of the image sensor chip 60, over a side surface and to a back surface of the silicon chip 61.

Each of the redistribution wirings 64A and 64B extends onto a glass substrate 65 which is bonded to the back surface of the silicon chip 61. Each of bump electrodes 66A and 66B is formed on an end of each of the redistribution wirings 64A and 64B extended onto the glass substrate 65. The bump electrodes 66A and 66B are connected to the printed circuit board 70.

A DSP (Digital Signal Processor) 80, which performs video signal processing on the electric signals from the image sensor chip 60, is connected to a back surface of the printed circuit board 70 through bump electrodes 81A and 81B.

In the camera module described above, the lens-barrel 50, the lens 51, the IR filter 52 and the image sensor chip 60 are discrete components, and the camera module is assembled by putting these discrete components together. This causes difficulty in reducing the size and manufacturing cost of the camera module.

In addition, a combined use of a plurality of lenses needed to meet requirements of high quality picture further increases the size and manufacturing cost of the camera module.

It is an object of this invention to lessen this drawback.

### SUMMARY OF THE INVENTION

The solution according to the invention lies in the features of the independent claims and preferably in those of the dependent claims.

The invention provides a camera module that includes an image sensor unit having an image sensor chip that has a photoelectronic transducer disposed in its top surface and a terminal for external connection disposed on its back surface, a first lens bonded to the top surface of the image sensor unit, and a second lens bonded onto the first lens.

The invention also provides a manufacturing method of a camera module. The method includes providing an image sensor wafer having a plurality of image sensor chips. Each of the image sensor chips has a photoelectronic transducer disposed in the top surface thereof and a terminal for external connection disposed on the back surface thereof. The method also includes providing a first lens array having a plurality of first lenses and a second lens array having a plurality of second lenses, bonding the image sensor wafer, the first lens array and the second lens array to form a bonded unit, and dividing the bonded unit into individual camera modules so that each of the camera modules includes one of the image sensor chips, one of the first lenses and one of the second lenses.

By virtue of the invention camera modules having a compound lens (two or more lenses) are provided that allow for an increased picture quality combined with a cost effective manufacturing.

### BRIEF DESCRIPTION OF THE DRAWINGS

Fig. 1 is a plan view showing a camera module according to a first embodiment of this invention.
Fig. 2 is a cross-sectional view showing a section X-X in Fig. 1.
Fig. 3 is a cross-sectional view showing a manufacturing method of the camera module according the first embodiment of this invention.
Figs. 4A and 4B are plan views showing a first example of a lens array.
Figs. 5A and 5B are plan views showing a second example of the lens array.
Figs. 6A and 6B are plan views showing a third example of the lens array.
Fig. 7 is a cross-sectional view showing a manufacturing method of the camera module according the first embodiment of this invention.
Fig. 8 is a cross-sectional view showing the manufacturing method of the camera module according the first embodiment of this invention.
Fig. 9 is a cross-sectional view showing a manufacturing method of a camera module according a second embodiment of this invention.
Fig. 10 is a cross-sectional view showing the manufacturing method of the camera module according the second embodiment of this invention.
Fig. 11 is a cross-sectional view showing the manufacturing method of the camera module according the second embodiment of this invention.
Fig. 12 is a cross-sectional view showing a manufacturing method of a camera module according a third embodiment of this invention.
Fig. 13 is a cross-sectional view showing the manufacturing method of the camera module according the third embodiment of this invention.
Fig. 14 is a cross-sectional view showing the manufacturing method of the camera module according the third embodiment of this invention.
Fig. 15 is a cross-sectional view showing a conventional camera module.

### DETAILED DESCRIPTION OF THE INVENTION

Next, embodiments of this invention will be described in detail, referring to the figures.

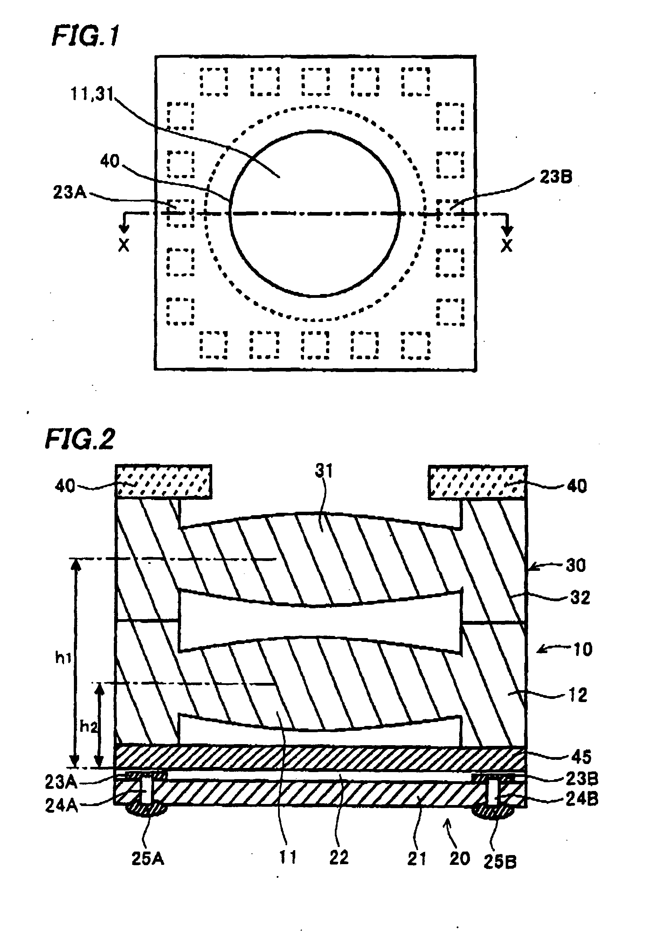

First, a structure of a camera module according to a first embodiment of this invention will be described. Fig. 1 is a plan view showing the camera module, and Fig. 2 is a cross-sectional view showing a section X-X in Fig. 1.

Basic structure of the camera module is an integrated unit composed of an image sensor chip 20, a first lens 10 bonded onto the image sensor chip 20 and a second lens 30 bonded to the first lens 20 so that the two lenses face to each other. In addition, an iris material 40 made of a film such as an acrylic film or a polyolefin film is bonded to the second lens 30. Also, an IR filter 45 is bonded between the image sensor chip 20 and the first lens 10.

The first lens 10 is composed of a first lens body 11 which is circular-shaped on the plan view and a first lens frame 12 provided around the first lens body 11 to bolster it and molded together with the first lens body 11. The second lens 30 is composed of a second lens body 31 which is circular-shaped on the plan view and a second lens frame 32 provided around the second lens body 31 to bolster it and molded together with the second lens body 31.

A surface of the first lens frame 12 is bonded to a peripheral surface of the image sensor chip 20 through the IR filter 45 using an adhesive. The other surface of the first lens frame 12 is bonded to the second lens frame 32 using an adhesive.

The first lens body 11 and the second lens body 31 have predetermined shape of curved surface in order to obtain desired optical characteristics. Heights of the first lens frame 12 and the second lens frame 32 are determined to place centers (indicated by alternate long and short dashed lines in Fig. 2) of the first lens body 11 and the second lens body 32 at predetermined distances h1 and h2 from the surface of the image sensor chip 20, respectively.

In the image sensor chip 20, CCDs, which are photoelectronic transducers, are formed in a surface of a silicon chip 21, and a supporting glass substrate 22 is bonded to the silicon chip 21 using an adhesive or the like to bolster the silicon chip 21 which is as thin as several hundred micrometers. Electrode pads 23A and 23B are formed on a peripheral surface of the silicon chip 21. Each of the electrode pads 23A and 23B is connected with an input/output circuit of the image sensor chip 20.

A bottom surface of each of the electrode pads 23A and 23B is connected with each of redistribution wirings 24A and 24B which penetrate through the silicon chip 21 to reach a back surface of the image sensor chip 20. Each of bump electrodes 25A and 25B, which serve as terminals for external connection, is formed on an exposed surface of each of the redistribution wirings 24A and 24B.

Although the IR filter 45 is bonded between the image sensor chip 20 and the first lens 10 in the structure described above, the IR filter may be bonded onto the second lens frame 32 of the second lens 30. In this case, the iris material 40 is formed on the IR filter 45. And the first lens 10 is bonded onto the image sensor chip 20 directly.

When filtering function is given to the supporting glass substrate 22 which bolsters the silicon chip 21, the IR filter 45 can be omitted, leading to cost reduction due to reduction in number of parts. In this case, the filtering function is obtained by vacuum deposition of metal on the supporting glass substrate 22 or incorporating copper particles into the supporting glass substrate 22.

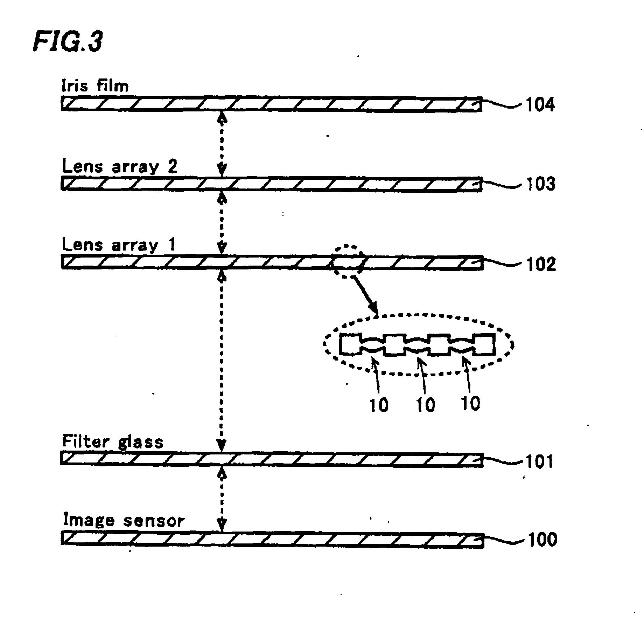

Next, a manufacturing method of the camera module described above will be explained. An image sensor wafer 100, in which a plurality of image sensor chips 20 formed by wafer processing is disposed in a matrix form, is provided as shown in Fig. 3. And an IR filter glass 101 in the same shape as the wafer is provided. Also, a first lens array 102, which is formed by integrating a plurality of the first lenses 10 each having equivalent shape and size to the image sensor chip 20, is provided. Also, a second lens array 103, which is formed by integrating a plurality of the second lenses 30 each having equivalent shape and size to the image sensor chip 20, is provided. An iris film 104 having a shape of the wafer is also provided.

Then the image sensor wafer 100, the IR filter glass 101, the first lens array 102, the second lens array 103 and the iris film 104 are bonded together, forming an integrated structure.

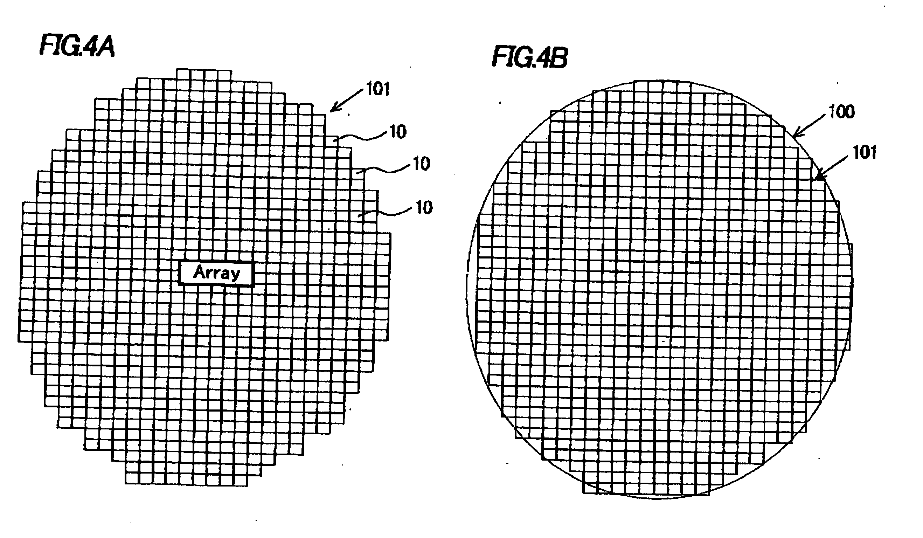

Fig. 4A is a plan view showing a first example of the first lens array 102. The first example of the first lens array 102 has a multitude of the first lenses 10 arranged to make an envelope of the array in a shape essentially same as the wafer, as shown in Fig. 4A. And the first lens array 102 is bonded onto the image sensor wafer 100, as shown in Fig. 4B.

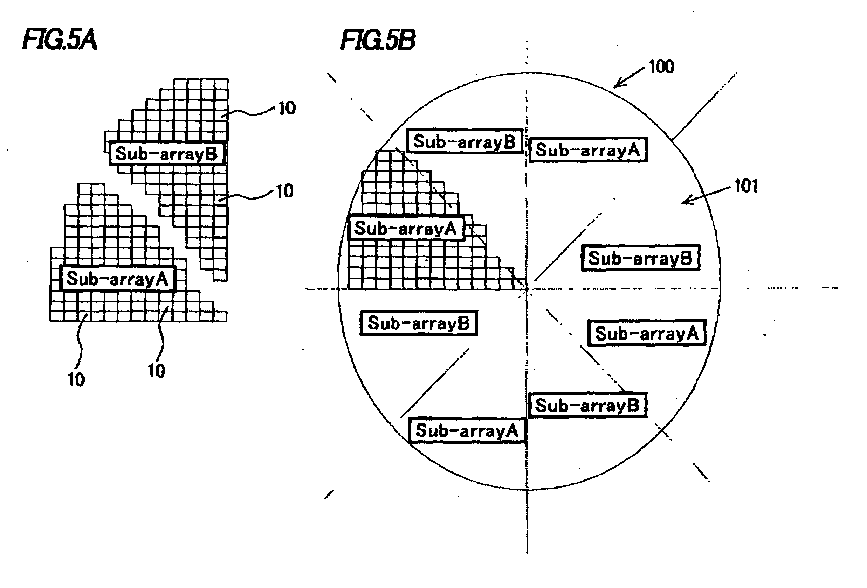

Fig. 5A is a plan view showing a second example of the first lens array 102. The second example of the first lens array 102 is composed of two kinds of sub-arrays, i.e., sub-arrays A and sub-arrays B, each of the sub-arrays being nearly triangular shaped, as shown in Fig. 5A. Four each of the sub-array A and the sub-array B are bonded to the image sensor wafer 100, as shown in Fig. 5B.

Fig. 6A is a plan view showing a third example of the first lens array 102. The third example of the first lens array 102 is composed of a single kind of rectangular sub-arrays, as shown in Fig. 6A.

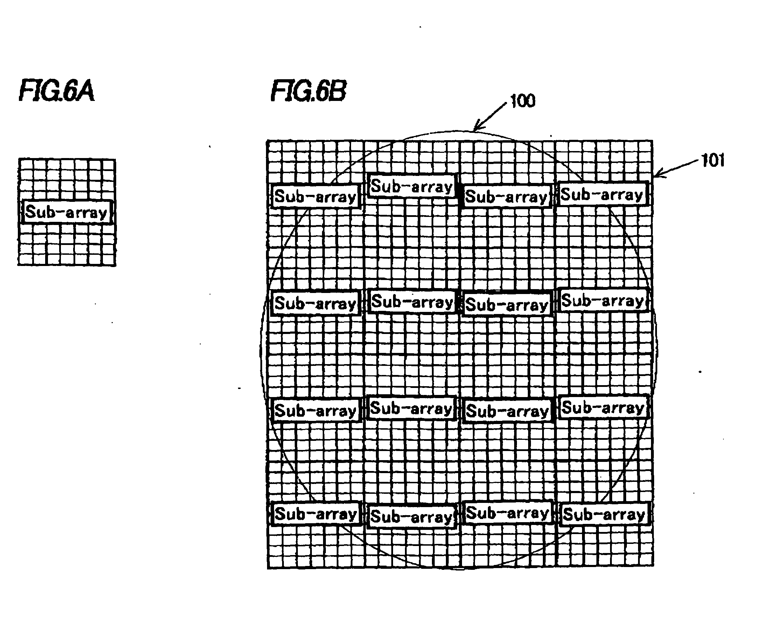

Sixteen sub-arrays are bonded to the image sensor wafer 100, as shown in Fig. 6B. Although portions which fall off the image sensor wafer 100 are used in vain, the third example of the first lens array 102 has an advantage of manufacturing simplicity, since it is composed of a single kind of sub-arrays.

The second lens array 103 is formed in the same way as the first lens array 102.

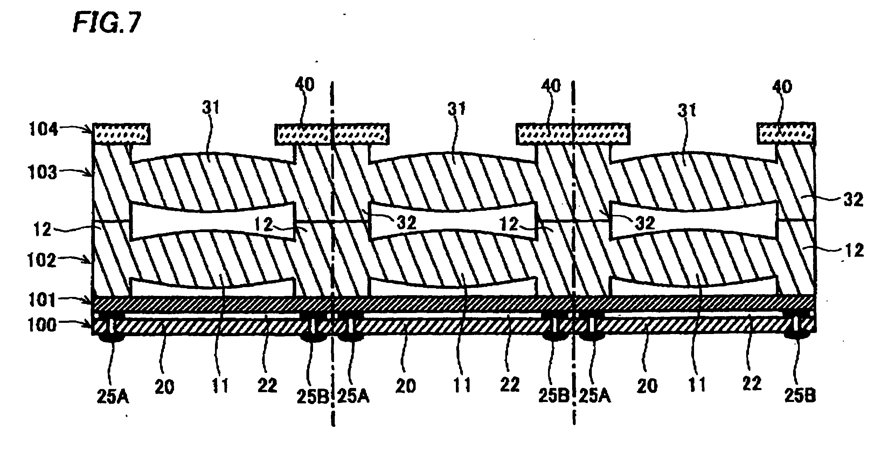

Fig. 7 is a cross-sectional view of the integrated structure formed by bonding the image sensor wafer 100, the IR filter glass 101, the first lens array 102, the second lens array 103 and the iris film 104 together. The first lens frame 12 of the first lens array 102 is disposed across a border between two neighboring image sensor chips 20, in a way that a center line of the first lens frame 12 approximately coincides with the border, as shown in the figure. The second lens frame 32 of the second lens array 103 is bonded to a top surface of the first lens frame 12.

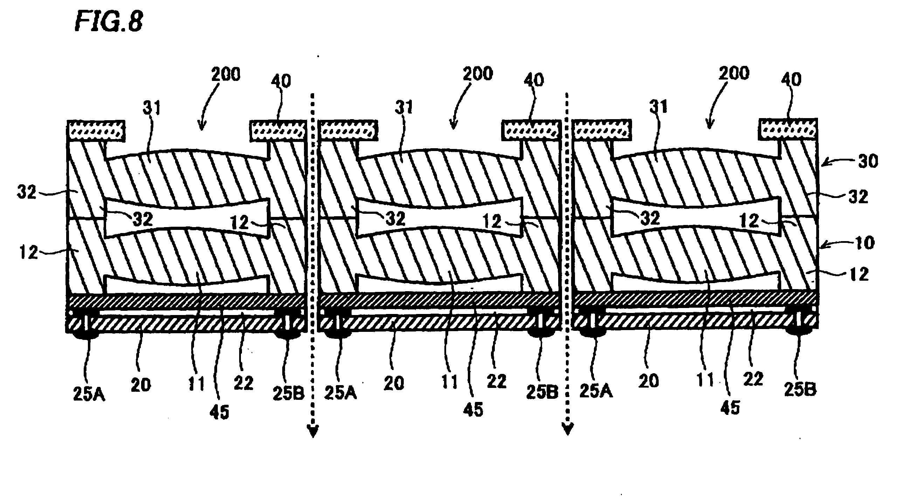

After the bonding process described above, the integrated structure described above is divided into individual camera modules 200 by cutting along borders between the image sensor chips 20 with a dicing blade or a laser, as shown in Fig. 8. The first lens frame 12 and the second lens frame 32 are divided into approximately half in width at the same time.

Then each of the individual camera modules 200 is mounted on a printed circuit board through bump electrodes 25A and 25B on the back surface of the image sensor chip 20.

When the first lens 10 and the second lens 30 are made of plastic, heat resistance of the plastic comes into question, because heat treatment is applied on the bump electrodes 25A and 25B usually when the camera module 200 is mounted on the printed circuit board. In this case, it is better to use a plastic material with a higher heat resistance or gold bumps which can be connected at lower temperature.

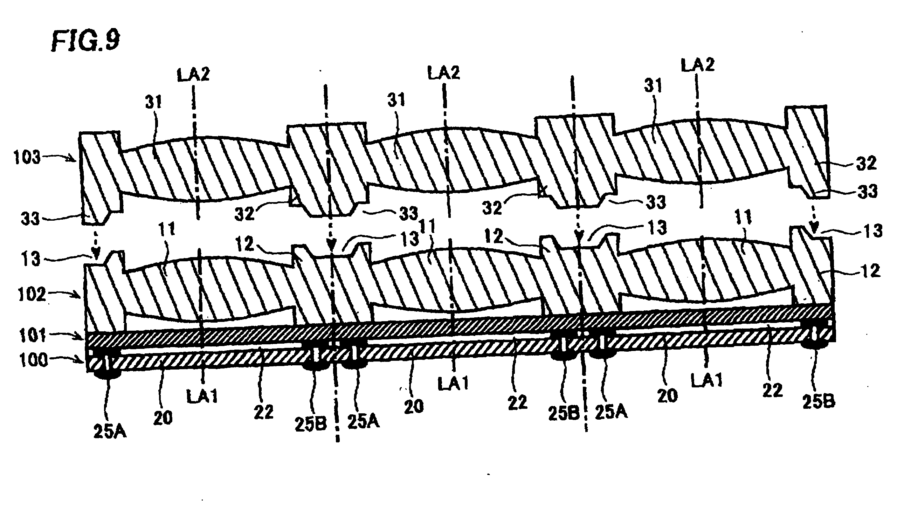

Next, a second embodiment of this invention will be explained referring to Fig. 9, Fig. 10 and Fig. 11. A first lens 10 and a second lens 30 are bonded with an adhesive at a first lens frame 12 and a second lens frame 32 respectively, as described in the first embodiment.

When there arises an alignment error in a direction parallel to a bonding plane (horizontal direction in Fig. 7) in bonding a second lens array 103 to a first lens array 102 which is bonded onto an image sensor 100, an optical axis LA1 of a first lens body 11 and an optical axis LA2 of a second lens body 31 are misaligned and desired optical characteristics as a compound lens are not obtained.

Thus in this embodiment, concave portions 13 for guide in the first lens frames 12 and convex portions 33 for guide in the second lens frames 32 are formed in advance, so that when bonding the first lens array 102 to the second lens array 103 the concave portions 13 for guide fit with the convex portions 33 for guide to prevent the misalignment in direction parallel to the bonding plane (horizontal direction in Fig. 7), as shown in Fig. 9. Alignment between the optical axis LA1 of the first lens body 11 and the optical axis LA2 of the second lens body 31 is thereby made easier than in the first embodiment. Note that the convex portions for guide may be formed in the first lens frame 12 while the concave portions for guide are formed in the second lens frame 32 on the contrary to above description.

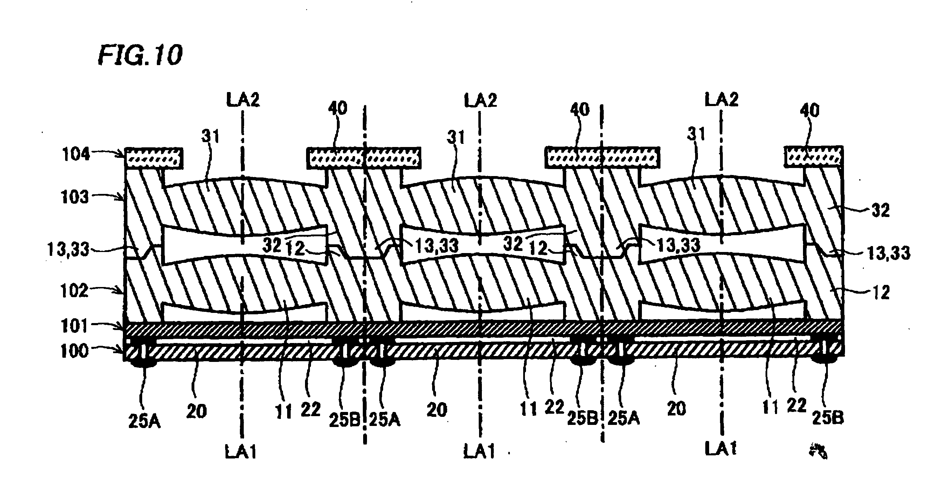

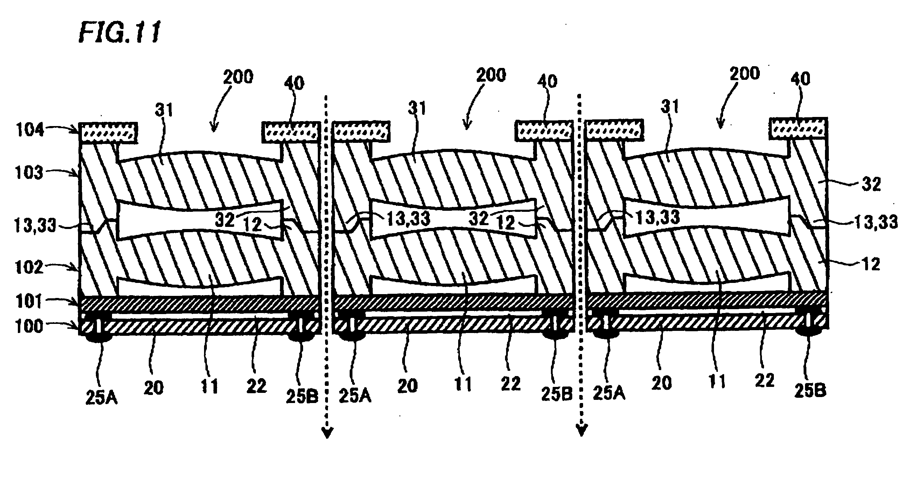

After that, the second lens array 103 is bonded to the first lens array 102 and an iris film 104 is bonded to the second lens array 103 as shown in Fig. 10, forming an integrated structure. Then, the integrated structure described above is divided into individual camera modules 200 by cutting along borders between image sensor chips 20 with a dicing blade or a laser, as shown in Fig. 11.

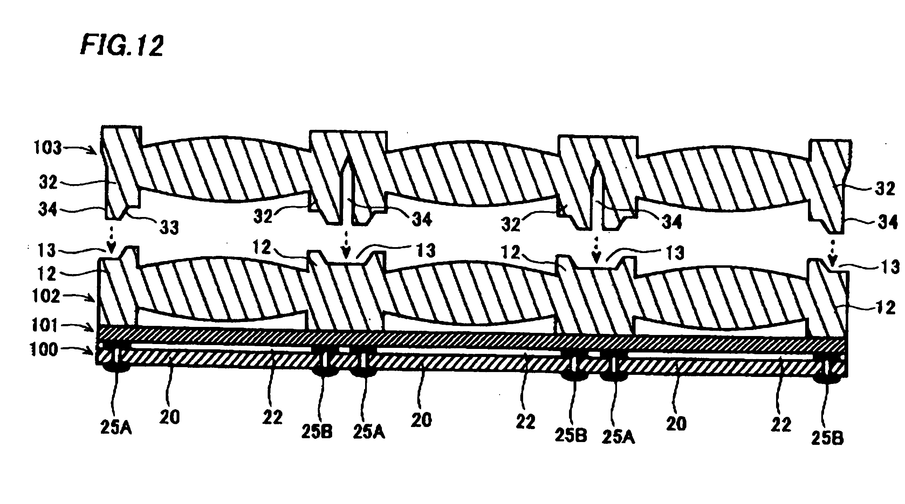

Next, a third embodiment of this invention will be explained referring to Fig. 12, Fig. 13 and Fig. 14. Alignment between the optical axis of the first lens body 11 and the optical axis of the second lens body 31 is made easier in the second embodiment described above than in the first embodiment. However, in injection molding of the first lens array 102 and the second lens array 103, there arises an error in dimension in each of the lens arrays. As a result, it becomes difficult to make the optical axis LA1 of the first lens body 11 coincide with the optical axis LA2 of the second lens body 31 in all of the camera modules 200.

That is, when bonding the second lens array 103 to the first lens array 102 with concave portions 13 for guide in the first lens frame 12 and the convex portions 33 for guide in the second lens frame 32 formed in advance as described above, even if the concave portion 13 for guide exactly fits with the convex portion 33 for guide in a certain location (for example, at an edge of the lens arrays), the error in dimension grows cumulatively as distance from the certain location increases, leading to a poor fit between the concave portion 13 for guide and the convex portion 33 for guide.

Thus in this embodiment, allowing for a certain extent of error in dimension in molding the first lens array 102 and the second lens array 103, ditches 34 to absorb the error in dimension are formed in the bonding surfaces of the second lens frames 32, as shown in Fig. 12. Depth of the ditches 34 is less than thickness of the second lens frame 32. The ditches may be formed by cutting the second lens frames 32 with a dicing apparatus.

With resiliently varying width of the ditches 34 to absorb the error in dimension when bonding the second lens array 103 to the first lens array 102, each of the concave portions 13 for guide fits exactly with each of the convex portions 33 for guide. As a result, it becomes easy to make the optical axis LA1 of the first lens body 11 coincide with the optical axis LA2 of the second lens body 31 in all of the camera modules 200.

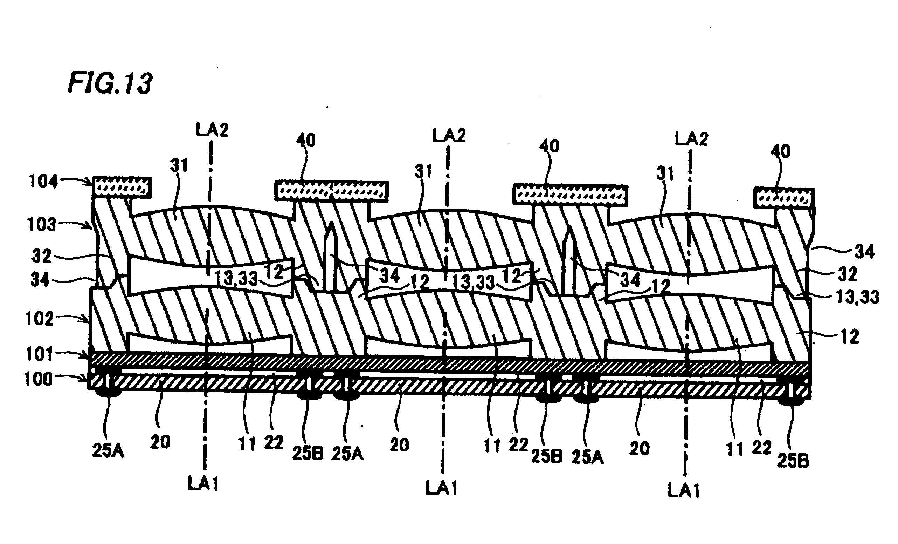

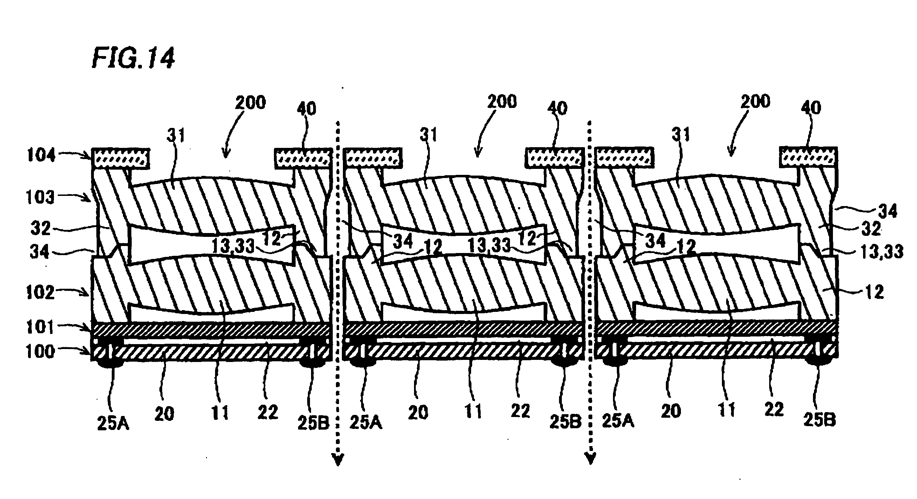

After that, the second lens array 103 is bonded to the first lens array 102 and an iris film 104 is bonded to the second lens array 103 as shown in Fig. 13, forming an integrated structure. Then, the integrated structure described above is divided into individual camera modules 200 by cutting along borders between image sensor chips 20 with a dicing blade or a laser, as shown in Fig. 14.

The camera module for a portable device is miniaturized to a size of the image sensor chip as well as its manufacturing cost is substantially reduced according to this invention. The camera module is capable of high quality picture of 300,000 pixels or above, since it has a compound lens.

## Claims

1. A camera module comprising:
- an image sensor unit comprising an image sensor chip (20) that has a photoelectronic transducer disposed in a top surface of the image sensor chip (20) and a terminal (25A, B) for external connection disposed on a back surface of the image sensor chip (20);
- a first lens (10) bonded to a top surface of the image sensor unit; and
- a second lens (30) bonded onto the first lens (10).

2. The camera module of claim 1, wherein the first and second lenses (10, 30) are configured to support weights thereof without a support of lens barrel.

3. The camera module of claim 1 or 2, wherein the first lens (10) comprises a first lens body (11) and a first lens frame (12) to support the first lens body (11), the second lens (30) comprises a second lens body (31) and a second lens frame (32) to support the second lens body (31), and a surface of the first lens frame (12) is bonded onto the image sensor unit and another surface of the first lens frame (12) is bonded to a surface of the second lens frame (32).

4. The camera module of claim 3, wherein a height of the first lens frame (12) and a height of the second lens frame (32) are determined so that the first lens body (11) and the second lens body (31) are placed at predetermined distances respectively from the top surface of the image sensor chip (20).

5. The camera module of claim 3 or 4, further comprising a first guide (13) formed in the first lens frame (12) and a second guide (33) formed in the second lens frame (32), wherein the first guide (13) engages with the second guide (33).

6. The camera module of claim 5, further comprising a ditch (34) formed in the surface of the second lens frame (32).

7. The camera module according to any of claims 1 to 6, further comprising a filter (45) to block light within a predetermined range of wavelength.

8. The camera module according to any of claims 1 to 7, further comprising an iris (40) to limit light incident on the image sensor chip (20).

9. A manufacturing method of a camera module comprising:
- providing an image sensor wafer (100) comprising a plurality of image sensor chips (20), each of the image sensor chips (20) comprising a photoelectronic transducer disposed in a top surface thereof and a terminal for external connection (25A, B) disposed on a back surface thereof;
- providing a first lens array (102) comprising a plurality of first lenses (10) and a second lens (103) array comprising a plurality of second lenses (30);
- bonding the image sensor wafer (100), the first lens array (102) and the second lens array (103) to form a bonded unit; and
- dividing the bonded unit into individual camera modules (200) so that each of the camera modules (200) includes one of the image sensor chips (20), one of the first lenses (10) and one of the second lenses (30).

10. The manufacturing method of claim 9, wherein each of the first lenses (10) comprises a first lens body (11) and a first lens frame (12) to support the first lens body (11), each of the second lenses (30) comprises a second lens body (31) and a second lens frame (32) to support the second lens body (31), and a surface of the first lens frame (12) is bonded to a surface of the second lens frame (32).

11. The manufacturing method of claim 10, further comprising forming a first guide (13) in the first lens frame (12) and forming a second guide (33) in the second lens frame (32), wherein the first and second lens arrays (102, 103) are aligned by engaging the first guide (13) with the second guide (33).

12. The manufacturing method of claim 11, further comprising forming a ditch (34) for the alignment in the surface of the second lens frame (32) before the alignment.

13. The manufacturing method according to any of claims 9 to 12, wherein each of the first lens array (102) and the second lens array (103) is formed in a horizontal shape substantially the a same as the image sensor wafer (100).

14. The manufacturing method according to any of claims 9 to 13, wherein each of the first lens array (102) and the second lens array (103) comprises a plurality of individual sub arrays of at least two different kinds.

15. The manufacturing method according to any of claims 9 to 13, wherein each of the first lens array (102) and the second lens (103) array comprises a plural of rectangular sub arrays.
